# FASCICULE DE BREVET EUROPEEN

(11) **EP 3 704 070 B1**
(45) Date de publication et mention de la délivrance du brevet: **08.04.2026**
(21) Numéro de dépôt: 18803462.3
(22) Date de dépôt: 26.10.2018
(51) Int. Cl.: C03C 17/22, C03C 17/23

(54) **ARTICLE VITROCERAMIQUE ET PROCÉDÉ D'OBTENTION**
GLASKERAMISCHER ARTIKEL UND VERFAHREN ZUR HERSTELLUNG DAVON
GLASS-CERAMIC ARTICLE AND METHOD FOR OBTAINING SAME

(30) Priorité: 30.10.2017 FR 1760239
(43) Date de publication de la demande: 09.09.2020
(73) Titulaire: Eurokera S.N.C., 02400 Château Thierry (FR)
(72) Inventeur: PELLETIER, Stéphanie, 75014 Paris (FR); GY, René, 93140 Bondy (FR); JEGOREL, Theo, 75019 Paris (FR); LUAIS, Erwann, 02400 Chateau-Thierry (FR)
(74) Mandataire: Saint-Gobain Recherche
(86) Numéro de dépôt international: PCT/FR2018/052670
(87) Numéro de publication internationale: WO 2019/086789

(56) Documents cités:
- WO-A1-99/08867
- US-A1- 2001 008 715
- US-A1- 2015 174 625
- US-B1- 6 391 213
- ROOHANI-ESFAHANI SEYED-IMAN ET AL: "Fabrication of bioinspired structured glass-ceramics with enhanced fracture toughness", JOURNAL OF MATERIALS SCIENCE, KLUWER ACADEMIC PUBLISHERS, DORDRECHT, vol. 52, no. 15, 4 April 2017 (2017-04-04), pages 9202 - 9210, XP036239069, ISSN: 0022-2461, [retrieved on 20170404], DOI: 10.1007/S10853-017-1056-Z

## Description

La présente invention concerne le domaine des vitrocéramiques. Plus précisément, elle concerne un article, ou produit, en vitrocéramique, destiné en particulier à couvrir ou recevoir des éléments de chauffage, tel qu'une plaque de cuisson. Par article vitrocéramique ou en vitrocéramique, on entend un article à base d'un substrat en matériau vitrocéramique, tel qu'une plaque vitrocéramique, ledit substrat pouvant le cas échéant être muni d'accessoires ou d'éléments supplémentaires (décoratifs ou fonctionnels) requis pour son usage final, l'article pouvant désigner tout aussi bien le substrat seul que celui muni d'équipements supplémentaires (par exemple une plaque de cuisson munie de son bandeau de commande, de ses éléments de chauffage, etc). La présente invention concerne également un procédé d'obtention dudit article.

Il existe plusieurs produits en vitrocéramique d'usage courant, en particulier les plaques de cuisson en vitrocéramique rencontrant un grand succès auprès des ménagistes, fabricants d'électroménagers et utilisateurs. Ce succès s'explique notamment par l'aspect attractif de ces plaques et par leur facilité de nettoyage.

Une vitrocéramique est à l'origine un verre, dit verre précurseur ou verre-mère ou green-glass, dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Il existe actuellement différents types de plaques en vitrocéramique, chaque variante étant le résultat d'études importantes et de nombreux essais, étant donné qu'il est très délicat de faire des modifications sur ces plaques et/ou sur leur procédé d'obtention sans risquer un effet défavorable sur les propriétés recherchées : en particulier, pour pouvoir être utilisée comme plaque de cuisson, une plaque vitrocéramique doit généralement présenter une transmission dans les longueurs d'onde du domaine du visible à la fois suffisamment basse pour masquer au moins une partie des éléments de chauffage sous-jacents au repos et suffisamment élevée pour que, selon les cas (chauffage radiant, chauffage par induction, etc), l'utilisateur puisse détecter visuellement les éléments de chauffage en état de marche dans un but de sécurité ; elle doit également présenter une transmission élevée dans les longueurs d'onde du domaine de l'infrarouge dans le cas notamment des plaques à foyers radiants. Les plaques vitrocéramiques doivent également présenter une résistance mécanique suffisante telle qu'exigée dans leur domaine d'utilisation. En particulier, pour pouvoir être utilisée comme plaque de cuisson dans le domaine de l'électroménager, une plaque vitrocéramique doit présenter une bonne résistance (telle que définie par exemple selon la norme EN 60335-2-6) à la pression, aux chocs (support et chute d'ustensiles, etc), etc.

Les plaques de cuisson vitrocéramiques les plus répandues sont de couleur sombre, en particulier de couleur noire ou brune ou brun-orangé, mais il existe également des plaques d'aspect plus clair (en particulier de couleur blanche, présentant par exemple un flou d'au moins 50% comme décrit dans le brevet FR2766816), voire des plaques transparentes munies généralement de revêtements opacifiants ou encore munies de filtres pour des effets de couleur particuliers.

Parmi les revêtements (fonctionnels et/ou décoratifs) connus pour les plaques vitrocéramiques, on trouve traditionnellement les émaux, à base de fritte de verre et de pigments. Les émaux présentent notamment l'avantage de pouvoir être déposés sur le verre précurseur (ou verre-mère ou green-glass) avant céramisation et de pouvoir être cuits lors de la céramisation, et peuvent avantageusement résister à de hautes températures, permettant ainsi l'usage de différents moyens de chauffage pour la plaque ; cependant ils peuvent diminuer localement la résistance mécanique des plaques vitrocéramiques et peuvent s'écailler, notamment pour des dépôts d'épaisseur importante ou en plusieurs passes, certaines couleurs n'étant en outre pas réalisables ou étant difficiles à obtenir (notamment en une seule passe), la cuisson des émaux pouvant également provoquer l'apparition de teintes non désirées (par exemple brunes ou grises pour les émaux noirs).

Il est également connu d'utiliser certaines peintures résistant à haute température, notamment à base de silicones, ces peintures étant alors déposées sur les substrats après céramisation, leur usage restant plus limité que celui des émaux en raison de leur moindre résistance notamment thermique et à l'abrasion. Les publications des demandes de brevet US 2015/174625 A1, US 2001/008715 A1 et WO 99/08867 A1, décrivent un article vitrocéramique comprenant une plaque vitrocéramique revêtu d'une couche nano-plissée.

Une préoccupation constante dans le domaine des vitrocéramiques, que la vitrocéramique soit revêtue ou non, est de pouvoir offrir un produit d'entretien facile, conservant son aspect et ses propriétés dans le temps. Le fait d'ajouter un revêtement rend souvent cet entretien plus complexe car les couches peuvent s'altérer lors du nettoyage de la vitrocéramique ou altérer les propriétés optiques ou mécaniques de la vitrocéramique.

La présente invention a cherché à fournir des produits en vitrocéramique, notamment de nouvelles plaques vitrocéramiques destinées à être utilisées avec un ou des éléments de chauffage telles que des plaques de cuisson, toujours plus fonctionnels et pratiques, tout en respectant les contraintes, notamment thermiques et mécaniques, propres aux utilisations desdits produits, en particulier a cherché à obtenir des produits en vitrocéramique pérennes et d'entretien facile, en veillant à proposer une solution simple et de préférence flexible autorisant le cas échéant la présence de décors, ou de fonctions additionnelles en fonction des besoins.

Ce but est atteint grâce au procédé mis au point selon l'invention, de même que par le produit vitrocéramique obtenu ainsi mis au point.

La présente invention concerne donc un nouvel article (ou produit) vitrocéramique, comprenant (ou formé de) au moins un substrat (ou support), tel qu'une plaque, en (matériau) vitrocéramique, ledit substrat étant au moins en partie muni, en particulier revêtu (en surface, sur au moins une partie d'une face) d'au moins une couche nano-plissée présentant des plis d'amplitude inférieure à 5 µm, et ladite couche nano-plissée présentant un pas et une amplitude telles que le rapport entre le pas et l'amplitude est compris entre 4 et 20, de préférence entre 5 et 15, en particulier entre 8 et 14.

La présente invention concerne également un procédé de fabrication d'un tel article vitrocéramique (comprenant au moins un substrat en vitrocéramique), à partir d'un substrat en verre (le substrat en verre-mère, devant former le substrat vitrocéramique par céramisation) dans lequel on applique, sur au moins une partie dudit substrat en verre (verre-mère), avant céramisation, au moins une couche mince, dont l'épaisseur n'excède pas 20 µm, en un matériau choisi dans le groupe des nitrures et/ou oxydes et/ou carbures et/ou alliages de l'un ou plusieurs des éléments suivants : silicium, aluminium, titane, zircone, étain et zinc, puis on effectue la céramisation du substrat en verre (substrat en verre-mère) ainsi revêtu, cette céramisation permettant alors d'obtenir un substrat vitrocéramique au moins en partie revêtu d'au moins une couche nano-plissée comme précédemment décrit.

Par nano-plissée, on entend présentant des plis - ou ondulations ou déformations courbes (ou changeant de direction sans former d'angles/d'angles vifs) avec une alternance de creux et de bosses - à l'échelle nanométrique, c'est-à-dire des plis d'amplitude (ou différence d'altitude entre le point le plus haut - crête de la bosse - et le point le plus bas - au fond du creux - de chaque pli) inférieure à 5 µm, plus précisément (strictement) inférieure à 2 µm, et notamment inférieure ou égale à 1 µm, de préférence (strictement) inférieure à 1 µm, l'amplitude des plis (ou de chaque pli) étant avantageusement de l'ordre de quelques nanomètres à centaines de nanomètres, comme précisé ultérieurement, l'amplitude moyenne (moyenne arithmétique) étant généralement de l'ordre de la centaine de nanomètres.

La présente invention a permis de mettre en évidence que le dépôt d'une couche, en particulier de type couche mince dont l'épaisseur n'excède pas 20 µm, et en particulier dans le cas présent moins de quelques microns, en particulier moins de 2 µm, d'un matériau choisi dans le groupe précédemment cité (matériau dit "dur", comparativement au substrat en verre lors de la céramisation qui voit sa viscosité diminuer et se comporte alors comme un substrat souple comparativement à la couche dudit matériau plus rigide), sur le substrat en verre-mère avant céramisation, entraine après le traitement thermique de céramisation (se produisant à des températures élevées dépassant généralement 900°C), le plissement de la couche en surface, entrainant également le plissement du substrat en surface, à l'échelle nanométrique, la surface changeant d'aspect visuellement (la surface revêtue devenant comparativement plus mate par rapport à la surface non revêtue ou revêtue en reprise après céramisation, et présentant notamment en réflexion un aspect métallique satiné - l'aspect satiné étant intermédiaire entre la matité et le brillant) et présentant de nouveaux avantages techniques inattendus, tels qu'une plus grande facilité de nettoyage.

Comme indiqué ultérieurement, il n'est pas exclu d'utiliser un empilement de couches ou d'autres couches sur ou sous la couche précitée, l'ensemble du revêtement étant alors avantageusement nano-plissé. Le produit selon l'invention obtenu après céramisation présente une bonne adhérence de la couche ou du revêtement nano-plissé au substrat vitrocéramique (sans avoir nécessité de traitement préalable du support et/ou l'utilisation d'un promoteur d'adhésion, d'une couche d'accrochage ou d'un primaire) ou à toute couche adjacente éventuellement présente sur le substrat. Cette couche/ce revêtement ne montre en particulier aucune délamination après un choc thermique (par exemple aux environs de 600°C), et résiste à de hautes températures. La couche/le revêtement présente également une bonne résistance à la rayure, et ne fragilise pas mécaniquement le substrat vitrocéramique (contrairement notamment à un émail).

L'invention a ainsi permis la mise au point d'un produit vitrocéramique à surface nano-plissée aux endroits souhaités (par exemple sur l'ensemble d'une face ou sur seulement quelques zones, par exemple des zones plus exposées aux manipulations ou salissures, telles que des zones de commande ou d'affichage ou des zones de chauffage, etc), ce produit étant susceptible d'être obtenu par le procédé défini précédemment et présentant divers avantages, tels que celui de permettre une moindre adhérence de la nourriture sur la ou les zones ou surfaces nano-plissées, ainsi que celui d'offrir une plus grande facilité de nettoyage comme indiqué précédemment, en même temps que le produit conserve une dureté et résistance mécanique telles que requises pour diverses utilisations (notamment pour son utilisation comme plaque de cuisson). La couche ou le revêtement nano-plissé(e) n'affecte pas en outre la transmission lumineuse de la vitrocéramique sur la ou les zones concernées, tout en permettant une diffusion de la lumière empêchant l'éblouissement de l'utilisateur et présentant un aspect esthétique inhabituel satiné. Ce nano-plissage donne en outre de façon inattendue la possibilité d'obtenir différents types de couleurs en réflexion, et ceci sans nécessiter l'ajout de colorants ou pigments (contrairement à d'autres types de couches) ou de filtres, en jouant notamment sur l'épaisseur et la composition de la couche nano-plissée tels que précisés ultérieurement.

La solution selon la présente invention permet donc d'obtenir de façon simple et économique, sans opération complexe (la couche pouvant être déposée par des techniques de dépôt sous pression réduite tels que la pulvérisation cathodique, comme indiqué ultérieurement), de façon durable et avec une grande flexibilité, des zones fonctionnelles et esthétiques dans toute zone souhaitée du produit, et ceci même lorsque ces zones sont destinées à être soumises à des températures élevées. L'article selon l'invention présente notamment une bonne tenue thermique compatible avec l'utilisation de divers types de chauffages, et ne pose pas de problèmes d'entretien, de rayures ou d'abrasion comme indiqué précédemment. Le produit selon l'invention ne subit en particulier pas de dégradation thermique à des températures supérieures ou égales à 400°C pouvant être atteintes notamment dans des applications telles que l'utilisation en tant que plaques de cuisson.

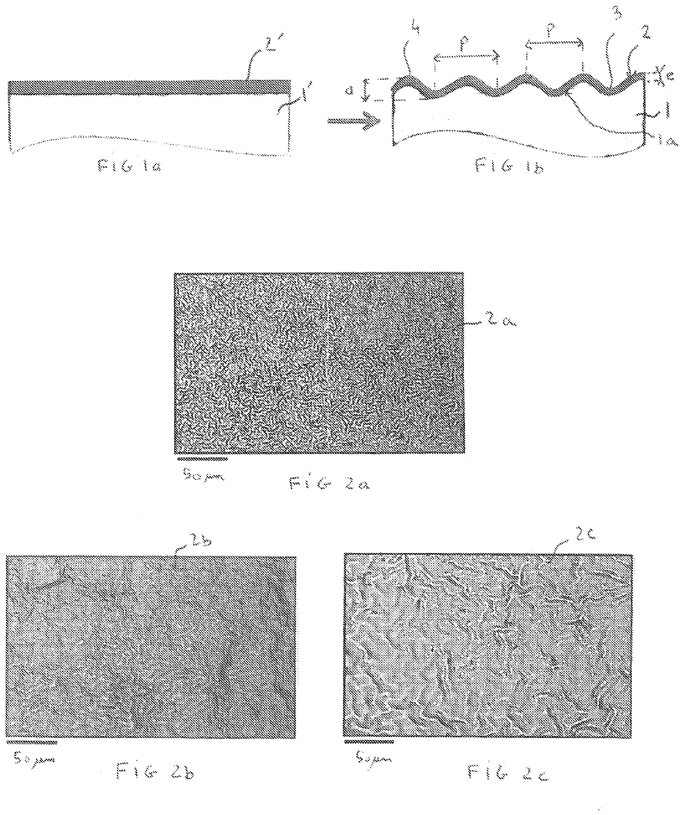

L'article selon l'invention comprend, comme précédemment indiqué, un substrat au moins en partie (c'est-à-dire en ou sur au moins une zone dudit substrat, sur au moins une face, voire plusieurs faces) muni (ou pourvu), en particulier revêtu, d'au moins (ou par au moins) une couche - ou un revêtement sous forme d'au moins une couche - nano-plissé(e). Cette texturation, que l'on appelle dans le cas présent nano-plissage, se trouve en surface du substrat sur les zones souhaitées et permet d'obtenir les avantages précédemment cités, et est observée sur le substrat lui-même (sur sa couche superficielle) en même temps que sur le revêtement ayant généré le cas échéant ce nano-plissage. Cette texturation alterne des creux et des bosses à la manière d'un plissage, avec une amplitude et une périodicité particulières, ce plissage étant généralement (et de préférence pour obtenir les effets recherchés) multidirectionnel, les plis formés s'étendant alors dans une multitude de directions parallèlement à la surface du substrat et formant une texturation ou structuration isotrope, comme illustré ultérieurement dans les figures 2a, 2b et 2c. Cette texturation se répercutant sur la couche superficielle du substrat vitrocéramique se substitue le cas échéant à toute microrugosité initiale à la surface du verre-mère, ladite texturation constituant ainsi la seule rugosité d'amplitude inférieure à 5 µm dans la zone (ou les zones) du substrat munie(s) de ladite couche nano-plissée (les autres zones éventuelles non munies de cette texturation pouvant le cas échéant présenter d'autres texturations ou des texturations superposées).

Le profil ou aspect morphologique de cette texturation ou nano-plissage s'apparente généralement à une courbe quasi-périodique, ce profil pouvant varier dans certaines limites définies ci-après suivant le cas échéant l'épaisseur de la couche de revêtement, sa nature, et les températures, durées de traitement ou contraintes appliquées lors du procédé de fabrication utilisé. Par exemple, comme évoqué précédemment, le procédé défini selon l'invention fournit une contraction qui forme une texturation normalement isotrope, mais il est également possible de contrôler l'orientation des plis en appliquant une déformation anisotrope ou des contraintes sur le substrat lorsqu'il est suffisamment mou lors de la phase de céramisation ou de refroidissement, par exemple par application d'une traction unidirectionnelle simultanément au refroidissement. Le nano-plissage obtenu peut ainsi être suivant une direction unique ou suivant une direction principale (nano-plissage unidirectionnel), et/ou peut être le cas échéant anisotrope. L'épaisseur de la couche de revêtement et sa nature impactent aussi la morphologie du plissage, en particulier son pas et son amplitude, ainsi que la coloration du revêtement (fonction notamment de l'intensité de la réflexion L* de la zone munie du revêtement).

Le nano-plissage selon l'invention se présente sous forme de plis ou ondulations ou sinuosités ou rides, en particulier avec des sommets sensiblement arrondis, (pseudo) périodiques, plus ou moins sinueux et généralement multi-orientés, comme illustré ultérieurement dans les figures 2a, 2b et 2c, avec une largeur de bosses et creux et une amplitude sensiblement constantes.

La couche nano-plissée, ou encore les plis de la couche ou du revêtement nano-plissé(e), présente(nt) avantageusement un pas ou période (distance moyenne - moyenne arithmétique - entre deux crêtes - ou points les plus hauts - consécutives de bosses, ou entre deux points les plus bas de creux consécutifs) quasi-périodique entre 10 nm et 40000 nm, de préférence entre 100 nm et 10000 nm, en particulier entre 500 et 8500 nm, notamment supérieur à 500 nm et inférieur ou égal à 8000 nm, voire inférieur à 6000 nm, voire inférieur à 5000 nm, et une amplitude inférieure à 5 µm, plus précisément inférieure à 2 µm, notamment inférieure ou égale à 1 µm, de préférence inférieure à 1 µm, en particulier comprise entre 4 nm et 900 nm , de préférence comprise entre 50 nm et 850 nm. La mesure et l'analyse du pas et de plis se fait par exemple par microscopie à force atomique (AFM) ou profilomètrie optique (par exemple le profilomètre à stylet commercialisé par la société Bruker sous la référence Dektak), en particulier sur une surface d'analyse de 80 µm par 80 µm, par exemple avec 1024 points de mesure.

Le rapport entre le pas et l'amplitude (c'est-à-dire le rapport pas sur amplitude, ou pas par rapport à l'amplitude, exprimés en nanomètres) est compris entre 4 et 20, de préférence entre 5 et 15, en particulier entre 8 et 14, notamment de l'ordre de 10 à 12.

Avantageusement, la couche nano-plissée est une couche de revêtement, c'est-à-dire que le substrat est revêtu (à sa surface dans la zone concernée) de ladite couche, par opposition au cas (évoqué par la suite) où la couche nano-plissée est la couche superficielle du substrat (dans ce cas on dit que le substrat est "muni" de ladite couche et non "revêtu"), en particulier est la couche ou une couche du revêtement, déposé(e) avant céramisation, ayant entrainé le plissement lors de la céramisation, cette couche ou ce revêtement pouvant éventuellement par la suite être recouvert par une ou d'autres couches, de façon le cas échéant à conserver le profil nano-plissé pour le revêtement final. Cette couche nano-plissée est avantageusement, comme déjà vu dans le procédé, en un matériau choisi dans le groupe des nitrures et/ou oxydes et/ou carbures et/ou alliages de l'un ou plusieurs des éléments suivants : silicium, aluminium, titane, zircone, étain et zinc. De préférence, le matériau de la couche est choisi dans le groupe des nitrures et/ou oxydes de l'un ou plusieurs des éléments suivants : silicium, aluminium, titane, zircone, étain et zinc, en particulier Si₃N₄, SiO₂, TiO₂, ZnO, SnZnO ou SnO₂, et de façon particulièrement préférée, ce matériau est du nitrure de silicium (Si₃N₄) ou de l'oxyde de silicium (SiO₂), plus particulièrement du nitrure de silicium.

La couche nano-plissée revêtant le substrat est de façon la plus simple et générale sous forme d'une seule couche (monocouche) en un matériau choisi dans les matériaux précédents, mais il est également possible d'avoir une couche nano-plissée formée d'un empilement de (sous-)couches (l'ensemble des sous-couches formant la couche et étant nano-plissé) choisies chacune dans les matériaux précédents, ou encore que la couche nano-plissée précitée selon l'invention fasse elle-même partie d'un empilement de couches (incluant éventuellement d'autres couches de matériaux différents que précité) l'ensemble formant alors un revêtement final, lui-même avantageusement nano-plissé.

L'épaisseur du revêtement nano-plissé, qu'il soit formé de la couche précitée (le cas échant formée d'un empilement de sous-couches) ou de plusieurs couches, est généralement comprise entre 20 nm et 2000 nm, préférentiellement est supérieure ou égale à 50 nm et inférieure ou égale à 300 nm, en particulier inférieure ou égale à 200 nm, chaque couche en un matériau choisi dans les matériaux précédents étant une couche de type couche mince d'épaisseur de l'ordre notamment de 20 à 200 nm.

De préférence, le rapport entre l'épaisseur de la couche nano-plissée déposée avant céramisation et ayant entrainé le plissement lors de la céramisation et l'amplitude (des plis) de ladite couche nano-plissée (c'est-à-dire le rapport épaisseur sur amplitude, exprimées en nanomètres) est compris entre 0.15 et 0.30, de préférence est de l'ordre de 0.20 à 0.28, en particulier de 0.21 à 0.27.

Le substrat selon l'invention peut également être revêtu d'autres couches non nano-plissées selon l'invention, déposées par exemple après céramisation, à effet fonctionnel et/ou décoratif et déposées en particulier dans d'autres zones que les zones nano-plissées, tels que des motifs habituels à base d'émail ou une couche de peinture sur une autre partie du substrat que la ou les parties nano-plissées.

Il n'est pas exclu également que la couche de revêtement ayant servi au nano-plissage selon le procédé de l'invention, soit ultérieurement retirée, par exemple par attaque chimique ou ablation laser, laissant alors en tant que couche nano-plissée, la couche superficielle du substrat vitrocéramique même, cette solution étant également avantageuse en terme de nettoyage.

Le plissage de la couche superficielle du substrat épouse celui de la couche ou du revêtement nano-plissé(e) ou ayant servi au nano-plissage. Le plissage ne rompt pas l'adhérence (qui est très bonne) entre la vitrocéramique et la couche de revêtement nano-plissée ou utilisée pour le nano-plissage et il n'y a pas formation de cloques dans la couche ou le revêtement nano-plissé(e) obtenu(e).

Comme indiqué précédemment, le nano-plissage est obtenu en particulier et avantageusement en procédant comme indiqué dans le procédé selon l'invention. On applique ainsi, sur au moins une partie du substrat en verre-mère devant donner par céramisation un substrat en vitrocéramique, au moins une couche en un matériau choisi dans les matériaux cités précédemment, puis on on effectue la céramisation du substrat en verre ainsi revêtu.

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller en particulier jusqu'à 700°C. La céramisation comprend généralement une étape d'élévation progressive de la température jusqu'au domaine de nucléation, généralement situé au voisinage du domaine de transformation du verre, une étape de traversée en plusieurs minutes (par exemple entre 5 et 60 minutes) de l'intervalle de nucléation (par exemple entre 650 et 830°C), une nouvelle élévation de la température pour permettre la croissance des cristaux (céramisation dans un intervalle allant par exemple de 850 à 1000°C, avec maintien de la température du palier de céramisation pendant plusieurs minutes (par exemple de 5 à 30 minutes) puis un refroidissement rapide jusqu'à la température ambiante.

L'application ou dépôt, avant céramisation, de la couche (ou le cas échéant de chaque couche) en un matériau choisi dans les matériaux précités sur verre-mère peut s'effectuer par toute technique appropriée et rapide permettant notamment de faire des aplats ou couches uniformes de ce type de couches, notamment par procédé de dépôt sous pression réduite tel que pulvérisation cathodique, notamment assistée par magnétron, ou encore dépôt chimique en phase vapeur (CVD), le cas échéant assisté par champ plasma (PECVD), l'application se faisant de préférence par pulvérisation cathodique, notamment assistée par magnétron.

Le substrat revêtu est ensuite soumis au traitement thermique de céramisation (à des températures pouvant atteindre entre 850 et 1000°C) pendant une durée généralement de plusieurs dizaines de minutes, comme indiqué précédemment. Lors de l'étape de céramisation à haute température, le substrat en verre voit sa viscosité diminuer, le verre se densifie (cristallisation de la matrice en verre) et subit un retrait volumique ou contraction (généralement isotrope, si aucune contrainte n'est appliquée), en particulier d'environ 1,5%. La contraction du substrat, résultant de l'élévation de température à une température supérieure à la température de transition vitreuse du verre du substrat puis du refroidissement du substrat, et la différence entre la contraction thermique du verre du substrat et la contraction thermique de la couche de revêtement, entrainent le plissage ou plissement de la couche et de la surface du verre, le plissage ne rompant pas l'adhésion entre la vitrocéramique et la couche mince, le procédé n'entrainant pas par ailleurs de formation de cloques.

Par ce procédé, on assure de manière simple, et potentiellement sur de grandes surfaces, un plissage nanométrique de la zone revêtue. La surface de ladite zone devient satinée et diffusante, et agréable au toucher. Le nano-plissage se substitue le cas échéant à toute microrugosité de la surface en verre initiale.

Le cas échéant, le procédé comprend également une opération de découpe (généralement avant céramisation), par exemple par jet d'eau, traçage mécanique à la molette, etc. suivie par une opération de façonnage (meulage, biseautage,...).

La couche nano-plissée ou le revêtement nano-plissé peut couvrir une partie seulement du substrat, ou toute une face, par exemple la face supérieure en position d'utilisation, particulièrement sujette à nettoyage, ou éventuellement tout ou partie de la face inférieure du substrat.

De préférence, le substrat (ou l'article selon l'invention lui-même s'il n'est formé que du substrat) est une plaque, destinée notamment à être utilisée avec, en particulier à couvrir ou recevoir, au moins une source lumineuse et/ou un élément de chauffage. Ce substrat (ou respectivement cette plaque) est généralement de forme géométrique, en particulier rectangulaire, voire carrée, voire circulaire ou ovale, etc, et présente généralement une face "supérieure" ou "externe" (face visible ou tournée vers l'utilisateur) en position d'utilisation, une autre face "inférieure" ou "interne" (généralement cachée, par exemple dans un châssis ou caisson de meuble) en position d'utilisation, et une tranche (ou chant ou épaisseur). La face supérieure est généralement plane et lisse mais peut aussi présenter au moins une zone en relief et/ou au moins une zone en creux et/ou au moins une ouverture et/ou des bords biseautés (ces formes ayant été ajoutées lors de la fabrication du substrat, par exemple par laminage ou effondrement ou pressage, etc, ou ayant été ajoutées en reprise), ces variations de forme constituant avantageusement des variations continues de la plaque (sans changement de matériaux ou raccords). La face inférieure peut également être plane et lisse ou munie de picots.

L'épaisseur du substrat vitrocéramique est généralement d'au moins 2 mm, notamment d'au moins 2.5 mm, et est avantageusement inférieure à 15 mm, en particulier est de l'ordre de 3 à 15 mm, notamment de l'ordre de 3 à 8 mm ou de l'ordre de 3 à 6 mm. Le substrat est de préférence une plaque plane ou quasi-plane (en particulier avec une flèche inférieure à 0,1% de la diagonale de la plaque, et de préférence de l'ordre de zéro).

Le substrat peut être à base de toute vitrocéramique, ce substrat présentant avantageusement un CTE nul ou quasi-nul, en particulier inférieur (en valeur absolue) à 30.10⁻⁷ K⁻¹ entre 20 et 700°C, notamment inférieur à 15.10⁻⁷K⁻¹, voire inférieur à 5.10⁻⁷ K⁻¹ entre 20 et 700°C.

De préférence, on utilise un substrat d'aspect sombre, faiblement transmissif et peu diffusant, notamment à base de toute vitrocéramique ayant, de manière intrinsèque, une transmission lumineuse allant de 0.8% à 40%, en particulier de 0.8 à 5%, notamment de 0.8 à 2%, et une transmission optique (déterminée de façon connue en faisant le rapport entre l'intensité transmise et l'intensité incidente à une longueur d'onde donnée) d'au moins 2.5% pour une longueur d'onde de 625 nm comprise dans le domaine du visible. Par « de manière intrinsèque», on entend que la plaque possède une telle transmission en elle-même, sans la présence d'un quelconque revêtement. En particulier, on utilise un substrat d'aspect noir ou brun, permettant, en combinaison avec des sources lumineuses placées dessous, d'afficher des zones lumineuses ou des décors, tout en masquant les éventuels éléments sous-jacents. Il peut être notamment à base d'une vitrocéramique noire comprenant des cristaux de structure β-quartz au sein d'une phase vitreuse résiduelle, la valeur absolue de son coefficient de dilatation étant avantageusement inférieure ou égale à 15.10⁻⁷K⁻¹, voire à 5.10⁻⁷K⁻¹, telle que la vitrocéramique des plaques commercialisées sous le nom Kerablack+ par la société Eurokera. En particulier, il peut s'agir d'une vitrocéramique affinée à l'arsenic de composition telle que décrite dans la demande de brevet EP0437228 ou US5070045 ou FR2657079, ou d'une vitrocéramique affinée à l'étain, présentant un taux d'oxydes d'arsenic inférieur à 0.2%, par exemple de composition telle que décrite dans la demande de brevet WO 2012/156444, ou encore affinée au(x) sulfure(s) comme décrit dans la demande de brevet WO2008053110.

Alternativement on peut utiliser un substrat transparent, revêtu le cas échéant d'un revêtement opacifiant (par exemple en peinture) généralement sur sa face inférieure, tel qu'une plaque commercialisée sous le nom Keralite^{®} par la société Eurokera.

Le substrat précité (préférentiellement d'aspect sombre, ou éventuellement transparent opacifié), muni de la couche ou du revêtement nano-plissé(e), présente en particulier une transmission lumineuse TL comprise entre 0% et 10%, une réflexion lumineuse comprise entre 8 et 20%, et son taux de diffusion est supérieur à 90%.

Les mesures optiques sont faites selon la norme EN 410. En particulier, la transmission lumineuse TL est mesurée selon la norme EN 410 en utilisant l'illuminant D65, et est la transmission totale (notamment intégrée dans le domaine du visible et pondérée par la courbe de sensibilité de l'œil humain), tenant compte à la fois de la transmission directe et de l'éventuelle transmission diffuse, la mesure étant faite par exemple à l'aide d'un spectrophotomètre muni d'une sphère intégrante (en particulier avec le spectrophotomètre commercialisé par la société Perkin Elmer sous la référence Lambda 950), la réflexion lumineuse étant également mesurée à l'aide du spectrophotomètre (tel que celui commercialisé par la société Perkin Elmer sous la référence Lambda 950) en mode réflexion totale. Le taux de diffusion lumineuse, défini comme étant le rapport de la transmission diffuse sur la transmission totale en utilisant l'illuminant D65, est également évalué, par exemple, à l'aide du spectrophotomètre muni d'une sphère intégrante utilisé pour les mesures de transmission et de réflexion lumineuses.

Comme indiqué précédemment, la présence d'autres types de revêtements que la couche précitée n'est pas exclue sur le substrat, notamment la présence d'autres couches fonctionnelles (couche anti-rayure, couche anti-débordement, couche opacifiante, etc) ou de décors supplémentaires, en particulier localisés (par exemple un émail en face supérieure pour former des motifs simples ou des logos).

L'article selon l'invention peut en outre comprendre, associés ou combinés au substrat, une ou plusieurs sources lumineuses et/ou un ou plusieurs éléments de chauffage (ou éléments chauffants, tels qu'un ou plusieurs éléments radiants ou halogènes et/ou un ou plusieurs brûleurs à gaz atmosphérique et/ou un ou plusieurs moyens de chauffage par induction), généralement placés en face inférieure du substrat.

La ou les sources peuvent être intégrées dans/couplées à une ou des structure(s) de type afficheur(s) (par exemple à diodes électroluminescentes dits « à 7 segments »), à un bandeau de commande électronique à touches sensitives et affichage digital, etc. Les sources lumineuses sont avantageusement formées par des diodes électroluminescentes, plus ou moins espacées, éventuellement associées à un ou plusieurs guides optiques.

L'article peut éventuellement comprendre, en combinaison avec les sources lumineuses, au moins un guide d'onde destiné à propager la lumière d'une partie à l'autre de l'article (en particulier par réflexion totale interne ou par réflexion métallique), la ou les sources coopérant avec le ou les guides et émettant/étant couplées par exemple par la tranche ou le chant du ou des guides associés, et/ou un ou plusieurs filtres sous le substrat, généralement entre une ou des sources et le substrat.

L'article selon l'invention peut être en particulier une plaque de cuisson ou tout article en vitrocéramique présentant par exemple un affichage ou au moins une zone lumineuse à caractère fonctionnel ou décoratif et/ou des éléments chauffants, tel qu'un plan de travail en vitrocéramique ou un ilot central, voire un meuble de type console (le substrat formant par exemple la partie supérieure), etc. Dans son application la plus courante, l'article selon l'invention est destiné à servir de plaque de cuisson, cette plaque étant généralement destinée à être intégrée dans une table de cuisson ou cuisinière comprenant également des éléments chauffants, par exemple des foyers radiants ou halogènes ou des éléments de chauffage par induction. Dans une autre application avantageuse, l'article selon l'invention est un plan de travail avec différents affichages, et sans nécessairement de zones de cuisson.

L'article peut également être muni de (ou associée avec des) élément(s) fonctionnel(s) supplémentaire(s) (cadre, connecteur(s), câble(s), élément(s) de commande), etc.

Les figures suivantes, non limitatives, permettent d'illustrer la présente invention :
- la figure 1a représente une coupe schématique et non à l'échelle, d'un substrat ou d'une partie d'un substrat en verre-mère revêtu, utilisé pour obtenir l'article selon l'invention;
- la figure 1b représente le substrat ou la partie de substrat obtenu(e) après céramisation du substrat ou de la partie de substrat de la figure 1a;
- La figure 2a montre une vue au microscope optique de la surface nano-plissée obtenue dans un premier exemple de réalisation de l'invention;
- La figure 2b montre une vue au microscope optique de la surface nano-plissée obtenue dans un deuxième exemple de réalisation de l'invention;
- La figure 2c montre une vue au microscope optique de la surface nano-plissée obtenue dans un troisième exemple de réalisation de l'invention

La figure 1b illustre un article, ou une partie d'article selon l'invention, cet article comprenant un substrat en vitrocéramique 1, revêtue d'une couche nano-plissée 2 en un matériau choisi dans le groupe des nitrures et/ou oxydes et/ou carbures et/ou alliages de l'un ou plusieurs des éléments suivants : silicium, aluminium, titane, zircone, étain et zinc, la couche nano-plissée, formée d'une alternance de creux 3 et de bosses 4, présentant une amplitude a inférieure à 5 µm, plus précisément inférieure à 2 µm, notamment inférieure ou égale à 1 µm, de préférence inférieure à 1 µm, en particulier comprise entre 4 nm et 900 nm, et de préférence comprise entre 50 et 850 nm, un pas p entre 10 nm et 40000 nm, de préférence entre 100 et 10000 nm, en particulier entre 500 et 8500 nm, et une épaisseur e (uniforme sur toute la surface de la couche) de l'ordre de 20 nm à 200 nm. Le nano-plissage est reproduit dans l'épaisseur de la couche de revêtement ainsi que sur une certaine profondeur, correspondant à l'amplitude du plissage, du substrat vitrocéramique, la face 1a du substrat portant le revêtement et la couche de revêtement 2 étant intimement solidaires l'un de l'autre et constituant ainsi un ensemble unitaire à profil identique.

Ce substrat est obtenu par céramisation d'un substrat en verre-mère 1' revêtu en la zone choisie d'une couche 2' (figure 1a), sous forme d'un aplat déposé par exemple par pulvérisation cathodique, notamment assistée par magnétron, en un matériau choisi dans le groupe des nitrures et/ou oxydes et/ou carbures et/ou alliages de l'un ou plusieurs des éléments suivants : silicium, aluminium, titane, zircone, étain et zinc, cette couche présentant la même épaisseur que la couche nano-plissée obtenue après céramisation.

La couche nano-plissée (présentée en coupe simplifiée en figure 1b) est généralement isotrope et quasi-périodique. Une vue au microscope optique de la surface nano-plissée 2a, 2b, 2c obtenue est représentée dans trois exemples différents de produits réalisés selon l'invention en faisant varier l'épaisseur de la couche de revêtement, l'épaisseur étant de 50 nm dans le cas de la figure 2a, 100 nm dans le cas de la figure 2b et 200 nm dans le cas de la figure 2c, la couche déposée étant une couche de nitrure de silicium et le substrat vitrocéramique étant une vitrocéramique noire translucide, commercialisée sous la référence KeraBlack+ ou KeraVision par la société Eurokera, cette plaque présentant une face supérieure lisse et une face inférieure lisse et une épaisseur de 4 mm.

La surface nano-plissée obtenue se présente en majorité sous forme de plis allongés, plus ou moins sinueux et chacun avec une largeur sensiblement constante, multi-orientés (suivant plusieurs directions) et pratiquement isotrope. Le pas séparant deux plis (pseudo période) est respectivement de 2000 nm pour la couche de 50 nm d'épaisseur, de 5000 nm pour la couche de 100 nm d'épaisseur et de 8000 nm pour la couche de 200 nm d'épaisseur; l'amplitude est respectivement de 185 nm pour la couche de 50 nm d'épaisseur, de 450 nm pour la couche de 100 nm d'épaisseur et de 800 nm pour la couche de 200 nm d'épaisseur; le rapport entre le pas et l'amplitude (pas sur amplitude) est respectivement de 10.81 pour la couche de 50 nm d'épaisseur, de 11.11 pour la couche de 100 nm d'épaisseur et de 10 pour la couche de 200 nm d'épaisseur; et le rapport entre l'épaisseur et l'amplitude (épaisseur sur amplitude) est respectivement de 0.27 pour la couche de 50 nm d'épaisseur, de 0.22 pour la couche de 100 nm d'épaisseur et de 0.25 pour la couche de 200 nm d'épaisseur.

Le substrat et les couches nano-plissées obtenus n'ont montré aucune délamination après un choc thermique de 620°C et n'ont montré aucune dégradation d'aspect après 100 h à 580°C.

Ils ont également montré une facilité accrue au nettoyage du concentré de tomates carbonisé à 200°C pendant 20 min. Il a ainsi fallu moins de 5 allers-retours d'un éponge jaune classique (sans surface grattante) imbibée d'eau pour totalement nettoyer la surface du substrat munie du nano-plissage.

On a également constaté que le revêtement réduit la formation de rayures pendant le nettoyage. La transmission lumineuse obtenue pour les différents substrats revêtus avec les revêtements d'épaisseurs testés (d'épaisseur 50, 100 et 200 nm dans les présents exemples) était de l'ordre de 1% et la réflexion lumineuse était comprise entre 8 et 20 %, le taux de diffusion lumineuse étant dans chaque cas supérieur à 90%.

A titre de comparaison, les mêmes tests ont été effectué sur la même plaque vitrocéramique mais sans revêtement nano-plissé. Dans le test de nettoyage du concentré de tomates, carbonisé à 200°C pendant 20 min, il a fallu plus de 30 allers retours de la même éponge imbibée d'eau que précédemment citée pour totalement nettoyer la surface. En outre la surface présentait plus de rayures apparentes. On a par ailleurs obtenu pour la plaque une transmission lumineuse de l'ordre de 1%, une réflexion lumineuse inférieure à 5 %, et un taux de diffusion lumineuse inférieur à 5%.

A titre de comparaison, les mêmes tests ont été effectué sur la même plaque vitrocéramique mais revêtue cette fois d'une couche de nitrure de silicium de 200 nm d'épaisseur déposée cette fois après céramisation (et donc non nano-plissée). Dans le test de nettoyage du concentré de tomates, carbonisé à 200°C pendant 20 min, il a également fallu plus de 30 allers retours de la même éponge imbibée d'eau que précédemment citée pour totalement nettoyer la surface. On a par ailleurs obtenu pour la plaque une transmission lumineuse de l'ordre de 1%, une réflexion lumineuse de l'ordre de 20%, et un taux de diffusion lumineuse inférieur à 5%.

Les articles, en particulier plaques, selon l'invention peuvent notamment être utilisées avec avantage pour réaliser une nouvelle gamme de plaques de cuisson pour cuisinières ou tables de cuisson ou une nouvelle gamme de tables de travail, consoles, crédences, ilots centraux, etc.

## Revendications

1. Article vitrocéramique, destiné en particulier à être utilisé avec au moins une source lumineuse et/ou au moins un élément de chauffage, ledit article comprenant au moins un substrat, tel qu'une plaque, en vitrocéramique, ledit substrat étant au moins en partie muni, en particulier revêtu, d'au moins une couche nano-plissée présentant des plis d'amplitude inférieure à 5µm , et ladite couche nano-plissée présentant un pas et une amplitude telles que le rapport entre le pas et l'amplitude est compris entre 4 et 20, de préférence entre 5 et 15, en particulier entre 8 et 14.

2. Article vitrocéramique selon la revendication 1, **caractérisé en ce que** la couche nano-plissée présente un pas entre 10 nm et 40000 nm, de préférence entre 100 et 10000 nm, en particulier entre 500 et 8500 nm.

3. Article vitrocéramique selon l'une des revendications 1 à 2, **caractérisé en ce que** la couche nano-plissée présente une amplitude inférieure à 5 µm, plus précisément inférieure à 2 µm, notamment inférieure ou égale à 1 µm, de préférence inférieure à 1 µm, en particulier comprise entre 4 nm et 900 nm, et de préférence comprise entre 50 et 850 nm.

4. Article vitrocéramique selon l'une des revendications 1 à 3, **caractérisé en ce que** la couche nano-plissée est isotrope.

5. Article vitrocéramique selon l'une des revendications 1 à 4, caractérisé en ce la couche nano-plissée est une couche de revêtement en un matériau choisi dans le groupe des nitrures et/ou oxydes et/ou carbures et/ou alliages de l'un ou plusieurs des éléments suivants : silicium, aluminium, titane, zircone, étain et zinc.

6. Article vitrocéramique selon l'une des revendications 1 à 5, **caractérisé en ce que** l'épaisseur du revêtement nano-plissé est comprise entre 20 nm et 2000 nm, préférentiellement est supérieure ou égale à 50 nm et inférieure ou égale à 300 nm, en particulier inférieure ou égale à 200 nm.

7. Article vitrocéramique selon l'une des revendications 1 à 6, **caractérisé en ce que** la couche nano-plissée est une couche déposée avant céramisation du substrat en verre devant former le substrat en vitrocéramique, cette couche ayant entrainé le plissement lors de la céramisation du substrat en verre en substrat vitrocéramique.

8. Article vitrocéramique selon la revendication 7, **caractérisé en ce que** le rapport entre l'épaisseur de ladite couche nano-plissée et l'amplitude de ladite couche est compris entre 0.15 et 0.30, de préférence est de l'ordre de 0.20 à 0.28, en particulier de 0.21 à 0.27.

9. Article vitrocéramique selon l'une des revendications 1 à 8, **caractérisé en ce que** la couche nano-plissée est la couche superficielle du substrat en vitrocéramique même.

10. Article vitrocéramique selon l'une des revendications 1 à 9, **caractérisé en ce que** ledit article ou ledit substrat est une plaque de cuisson ou un plan de travail.

11. Procédé de fabrication d'un article en vitrocéramique selon l'une des revendications 1 à 10, dans lequel on applique, sur au moins une partie d'un substrat en verre, au moins une couche mince, dont l'épaisseur n'excède pas 20µm, en un matériau choisi dans le groupe des nitrures et/ou oxydes et/ou carbures et/ou alliages de l'un ou plusieurs des éléments suivants : silicium, aluminium, titane, zircone, étain et zinc, puis on effectue la céramisation du substrat en verre ainsi revêtu.

12. Procédé selon la revendication 11, **caractérisé en ce que** ladite couche est ensuite retirée, par exemple par attaque chimique ou ablation laser.

## Patentansprüche

1. Glaskeramikartikel insbesondere zur Verwendung mit mindestens einer Lichtquelle und/oder mindestens einem Heizelement, wobei der Artikel mindestens ein Substrat, wie eine Platte, aus Glaskeramik umfasst, wobei das Substrat mindestens teilweise mit mindestens einer nanogefalteten Schicht versehen, insbesondere beschichtet, ist, die Falten mit einer Amplitude von weniger als 5 µm aufweist, und wobei die nanogefaltete Schicht eine Periodenlänge und eine Amplitude derart aufweist, dass das Verhältnis zwischen der Periodenlänge und der Amplitude zwischen 4 und 20, vorzugsweise zwischen 5 und 15, insbesondere zwischen 8 und 14 liegt.

2. Glaskeramikartikel nach Anspruch 1, **dadurch gekennzeichnet, dass** die nanogefaltete Schicht eine Periodenlänge zwischen 10 nm und 40000 nm, vorzugsweise zwischen 100 und 10000 nm, insbesondere zwischen 500 und 8500 nm aufweist.

3. Glaskeramikartikel nach einem der Ansprüche 1 bis 2,
**dadurch gekennzeichnet, dass** die nanogefaltete Schicht eine Amplitude von weniger als 5 µm, genauer weniger als 2 µm, insbesondere weniger als oder gleich 1 µm, vorzugsweise weniger als 1 µm, insbesondere zwischen 4 nm und 900 nm, und vorzugsweise zwischen 50 und 850 nm aufweist.

4. Glaskeramikartikel nach einem der Ansprüche 1 bis 3,
**dadurch gekennzeichnet, dass** die nanogefaltete Schicht isotrop ist.

5. Glaskeramikartikel nach einem der Ansprüche 1 bis 4,
**dadurch gekennzeichnet, dass** die nanogefaltete Schicht eine Beschichtungsschicht aus einem Material ist, das aus der Gruppe der Nitride und/oder Oxide und/oder Carbide und/oder Legierungen eines oder mehrerer der Elemente Silicium, Aluminium, Titan, Zirkonoxid, Zinn und Zink ausgewählt ist.

6. Glaskeramikartikel nach einem der Ansprüche 1 bis 5,
**dadurch gekennzeichnet, dass** die Dicke der nanogefalteten Beschichtung zwischen 20 nm und 2000 nm liegt, vorzugsweise größer oder gleich 50 nm und kleiner oder gleich 300 nm, insbesondere kleiner oder gleich 200 nm ist.

7. Glaskeramikartikel nach einem der Ansprüche 1 bis 6,
**dadurch gekennzeichnet, dass** die nanogefaltete Schicht eine Schicht ist, die vor der Keramisierung des Glassubstrats, das das Glaskeramiksubstrat bilden soll, abgeschieden wurde, wobei diese Schicht die Faltung während der Keramisierung des Glassubstrats zum Glaskeramiksubstrat bewirkt hat.

8. Glaskeramikartikel nach Anspruch 7, **dadurch gekennzeichnet, dass** das Verhältnis zwischen der Dicke der nanogefalteten Schicht und der Amplitude der genannten Schicht zwischen 0,15 und 0,30 liegt, vorzugsweise in der Größenordnung von 0,20 bis 0,28, insbesondere von 0,21 bis 0,27.

9. Glaskeramikartikel nach einem der Ansprüche 1 bis 8,
**dadurch gekennzeichnet, dass** die nanogefaltete Schicht die Oberflächenschicht des Glaskeramiksubstrats selbst ist.

10. Glaskeramikartikel nach einem der Ansprüche 1 bis 9,
**dadurch gekennzeichnet, dass** der Artikel oder das Substrat eine Kochplatte oder eine Arbeitsfläche ist.

11. Verfahren zur Herstellung eines Glaskeramikartikels nach einem der Ansprüche 1 bis 10, wobei auf mindestens einen Teil eines Glassubstrats mindestens eine dünne Schicht, deren Dicke 20 µm nicht überschreitet, aus einem Material, das aus der Gruppe der Nitride und/oder Oxide und/oder Carbide und/oder Legierungen eines oder mehrerer der Elemente Silicium, Aluminium, Titan, Zirkonoxid, Zinn und Zink ausgewählt ist, aufgebracht wird und anschließend die Keramisierung des so beschichteten Glassubstrats durchgeführt wird.

12. Verfahren nach Anspruch 11, **dadurch gekennzeichnet, dass** die Schicht anschließend entfernt wird, beispielsweise durch chemisches Ätzen oder Laserablation.

## Claims

1. Glass-ceramic article, intended in particular for use with at least one light source and/or at least one heating element, said article comprising at least one substrate, such as a plate, made of glass-ceramic, said substrate being at least partly provided, in particular coated, with at least one nano-wrinkled layer having an amplitude of less than 5 µm, said nano-wrinkled layer having a pitch and amplitude such that the ratio between pitch and amplitude is between 4 and 20, preferably between 5 and 15, in particular between 8 and 14.

2. Glass-ceramic article according to Claim 1, **characterized in that** the nano-wrinkled layer has a pitch between 10 nm and 40 000 nm, preferably between 100 and 10 000 nm, in particular between 500 and 8500 nm.

3. Glass-ceramic article according to one of Claims 1 to 2, **characterized in that** the nano-wrinkled layer has an amplitude of less than 5 µm, more precisely less than 2 µm, in particular less than or equal to 1 µm, preferably less than 1 µm, in particular between 4 nm and 900 nm, and preferably between 50 and 850 nm.

4. Glass-ceramic article according to one of Claims 1 to 3, **characterized in that** the nano-wrinkled layer is isotropic.

5. Glass-ceramic article according to one of Claims 1 to 4, **characterized in that** the nano-wrinkled layer is a coating layer of a material selected from the group of nitrides and/or oxides and/or carbides and/or alloys of one or more of the following elements: silicon, aluminium, titanium, zirconia, tin and zinc.

6. Glass-ceramic article according to one of Claims 1 to 5, **characterized in that** the thickness of the nano-wrinkled coating is between 20 nm and 2000 nm, preferably greater than or equal to 50 nm and less than or equal to 300 nm, in particular less than or equal to 200 nm.

7. Glass-ceramic article according to one of Claims 1 to 6, **characterized in that** the nano-wrinkled layer is a layer deposited prior to the ceramisation of the glass substrate to form the glass-ceramic substrate, which layer has caused the wrinkling during the ceramisation of the glass substrate into the glass-ceramic substrate.

8. Glass-ceramic article according to Claim 7, **characterized in that** the ratio between the thickness of said nano-wrinkled layer and the amplitude of said layer is between 0.15 and 0.30, preferably is of the order of 0.20 to 0.28, in particular 0.21 to 0.27.

9. Glass-ceramic article according to one of Claims 1 to 8, **characterized in that** the nano-wrinkled layer is the surface layer of the glass-ceramic substrate itself.

10. Glass-ceramic article according to one of Claims 1 to 9, **characterized in that** said article or substrate is a cooking hob or a worktop.

11. Process for the manufacture of a glass-ceramic article according to one of Claims 1 to 10, wherein at least one thin layer, which the thickness does not exceed 20 µm, of a material selected from the group of nitrides and/or oxides and/or carbides and/or alloys of one or more of the following elements: silicon, aluminium, titanium, zirconia, tin and zinc is applied to at least part of a glass substrate, and then the glass substrate thus coated is ceramised.

12. Process according to Claim 11, **characterized in that** said layer is subsequently removed, for example by chemical etching or laser ablation.
